Europäisches Patentamt

(19) European Patent Office

Office européen des brevets

(11) Numéro de publication: **0 030 748**

**A1**

(12) ## DEMANDE DE BREVET EUROPEEN

(21) Numéro de dépôt: **80201104.9**

(22) Date de dépôt: **24.11.80**

(51) Int. Cl.³: **B 23 K 11/30**

(30) Priorité: **05.12.79 BE 198425**

(43) Date de publication de la demande:
**24.06.81 Bulletin 81/25**

(84) Etats Contractants Désignés:
**BE DE FR GB IT**

(71) Demandeur: **ELPHIAC Société anonyme dite:**
**54, Chaussée de Charleroi**
**B-1060 Bruxelles (Saint-Gilles)(BE)**

(72) Inventeur: **Cuvelier, Michel**
**Rue Eracle, 20**
**B-4000 Liege(BE)**

(74) Mandataire: **Bossard, Franz et al,**
**ACEC - Service des Brevets Boîte Postale 4**
**B-6000 Charleroi(BE)**

(54) **Dispositif de nettoyage et/ou refroidissement de galets de soudage ou de forgeage.**

(57) Dispositif de nettoyage et/ou de refroidissement de galets (1;6) comprenant des moyens pour projeter de l'eau sur les surfaces concaves des galets.

L'invention est caractérisée en ce qu'un ensemble de plusieurs tuyères (2,12,18,19) est disposé à proximité d'un bord d'une surface concave (3,7,17) disposée dans le prolongement d'une partie de la surface concave du galet (1,6) à refroidir, en ce que l'extrémité de cet ensemble de tuyères (2,12) est orientée en direction du bord de cette surface concave dans un secteur angulaire déterminé (10,11) et en ce que cet ensemble de tuyères (2,12) est relié à une source de liquide de refroidissement sous pression.

Applicable au soudage de tubes à cordon longitudinal.

Fig.1

EP 0 030 748 A1

Croydon Printing Company Ltd.

# DISPOSITIF DE NETTOYAGE ET/OU DE REFROIDISSEMENT DE GALETS DE SOUDAGE OU DE FORGEAGE.

La présente invention a pour objet un dispositif de nettoyage et/ou de refroidissement de galets de soudage ou de forgeage concaves ou à gorge. Il est déjà connu de refroidir de tels galets en utilisant des moyens , par exemple des douches, pour projeter de l'eau sur la surface concave. Le refroidissement de tels galets est indispensable lorsque la totalité ou au moins une partie de leur surface concave vient en contact avec des zones incandescentes d'une matière entraînée par elles. Lorsque des galets à gorge sont utilisés pour le soudage de tubes au moyen d'une ébauche à cordon de soudure longitudinal, le bord de la surface concave des galets qui presse l'une contre l'autre les lèvres incandescentes de l'ébauche à souder s'échauffe et il est important de refroidir le galet, notamment à l'endroit du bord qui vient en contact avec les lèvres de l'ébauche qui, après l'opération, forment le cordon de soudure du tube.

Dans la manière classique de refroidir ce bord au moyen de douches, le refroidissement est médiocre et l'arrosage donne lieu à une dispersion d'eau mal contrôlée qui risque continuellement d'atteindre la partie du galet en contact momentané avec le point de soudure ce qui est tout à fait inadmissible. La demanderesse a constaté que l'arrosage par douche ou même par chute d'eau est insuffisant parce que la pression de contact entre le galet chaud et la nappe d'eau est insuffisante. L'invention a pour but de remédier à tous les inconvénients ci-dessus.

Elle est caractérisée en ce qu'une tuyère ou un ensemble de plusieurs tuyères est disposé proximité d'un bord d'une surface concave disposée dans le prolongement d'une partie de la surface concave du galet à refroidir, en ce que l'extrémité de cette tuyère ou de cet ensemble de tuyères est orientée en direction du bord de cette surface concave dans un secteur angulaire déterminé par rapport à l'axe du galet et en ce que cette tuyère ou ensemble de tuyères est relié à une source de liquide de refroidissement sous pression.

L'invention est expliquée ci-dessous par rapport à une description de quelques exemples de formes d'exécution en se référant au dessin annexé.

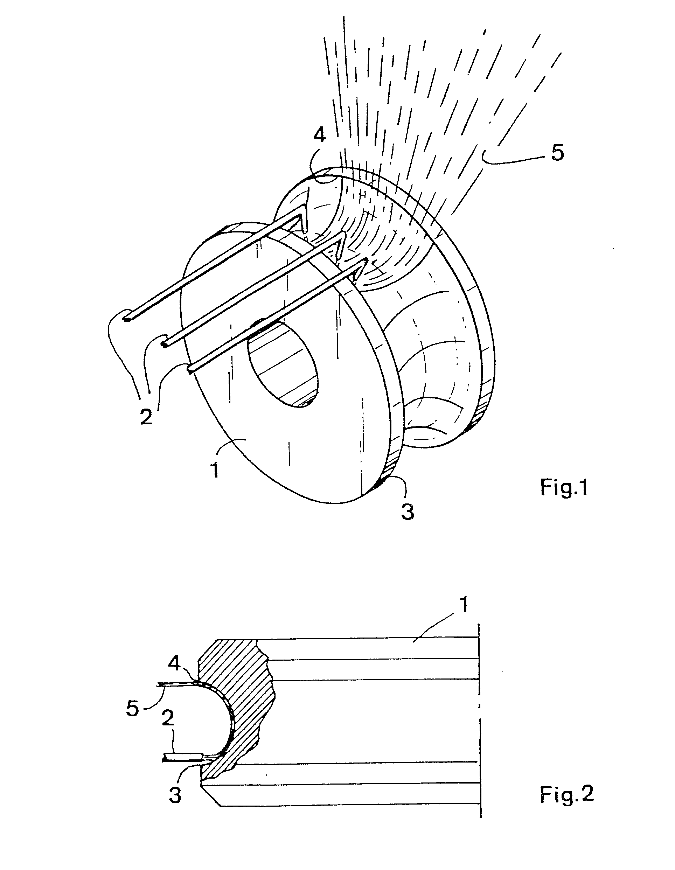

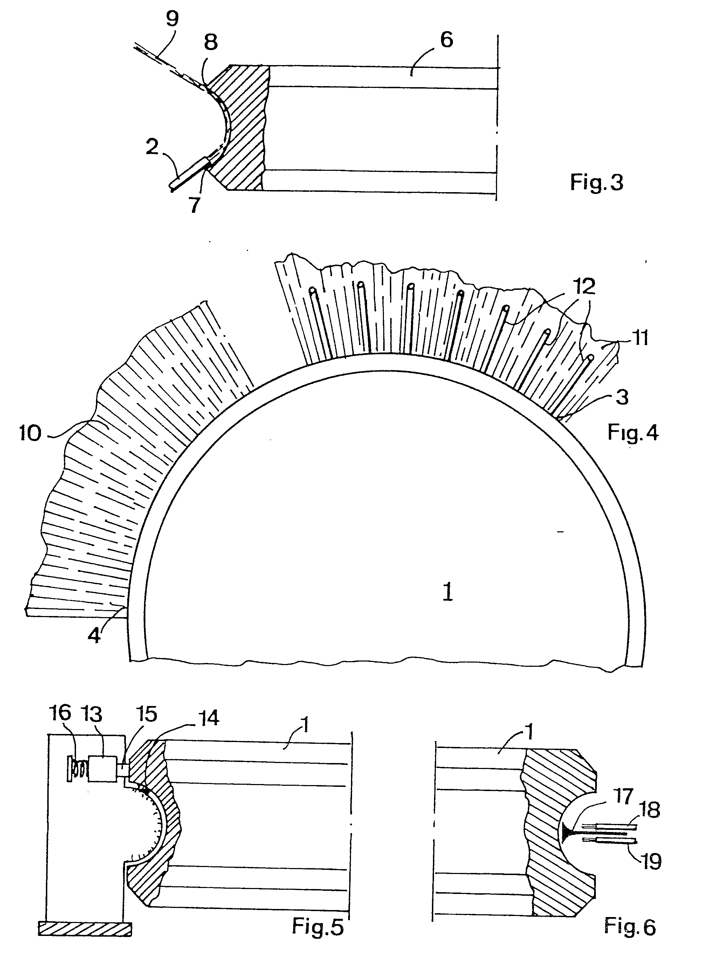

La figure 1 est une vue en perspective d'un galet refroidi suivant l'invention; les figures 2, 3, 5 et 6 sont des coupes partielles de galets de forgeage; la figure 4 est une vue en plan d'un galet refroidi.

Aux figures 1 et 2 un galet de soudage ou de forgeage 1 à gorge de section approximativement semi-circulaire est montré en perspective et en coupe. Un ensemble de tuyères 2 est disposé à proximité d'un bord 3 de la surface concave de la gorge. L'extrémité de cet ensemble de tuyères est orientée approximativement en direction radiale et parallèlement au plan perpendiculaire à l'axe du galet 1, tangent au bord 3 de la surface concave. Les tuyères 2 sont reliées à une source de liquide de refroidissement sous pression, en l'occurrence de l'eau, de préférence réglable, non représentée. L'eau sortant par les extrémités des tuyères fixes dirigée vers l'axe du galet 1 longe la surface concave du galet 1 qui tourne et exerce sur celle-ci une pression qui est d'autant plus grande que la courbure est plus forte et que la vitesse de l'eau est élevée. Si, comme cela est représenté à la figure 1, plusieurs tuyères juxtaposées projetent l'eau dans un secteur angulaire déterminé par rapport à l'axe du galet 1,l'eau provenant des jets individuels s'étend en une nappe continue sur la surface concave suite à la pression due à la force centrifuge et quitte le galet à l'endroit du bord opposé 4 de la surface concave en suivant un secteur dont le centre est le point d'intersection avec l'axe du galet 1 dans le plan 5 tangent au bord 4 de la surface concave du galet 1.

Si comme cela est représenté à la figure 3, un galet 6 ne présente pas une gorge de section semi-circulaire, mais une gorge dont la section est un arc de moins de 180°, en l'occurrence 120°, le liquide de refroidissement est projeté approximativement en direction tangentielle sur un des bords 7 de la surface concave du galet et quitte le bord opposé 8 en direction d'une partie de surface de cône tronqué 9 si la tuyère 2 est dirigée vers l'axe du galet 6. Par contre, si la tuyère 2 n'est pas dirigée vers l'axe du galet 6 mais suit une droite dans un plan ne coupant pas l'axe du galet 6, le liquide de refroidissement quitte le bord opposé 8 en direction d'une partie de surface d'hyperboloïde tronqué dont la section se confond avec la ligne 9 de la figure 3.

Lorsque les deux bords 3 et 4 d'un galet 1 sont à refroidir, ce refroidissement est obtenu par la répétition du procédé décrit par rapport aux figures 1 et 2 dans deux secteurs différents comme cela est représenté dans la vue en plan, figure 4. Dans un premier secteur 10, les tuyères 2 ne sont pas visibles parce que disposées en dessous de la nappe quittant le bord supérieur 4 comme cela est montré aux figures 1 et 2. Dans un deuxième secteur 11, par contre, des tuyères 12 sont dirigées dans le prolongement de la surface concave à proximité du bord supérieur 4, tandis que la nappe de liquide de refroidissement quitte la surface concave à l'endroit du bord inférieur 3.

Les surfaces concaves des gorges des galets 1 ou 6 sont non seulement refroidis par l'eau projetée sur elles, mais également nettoyées. Toutefois lorsque lors du passage de la matière à forger ou à souder dans les gorges des galets, des files ou paillettes se détachant de la matière à forger ou à souder s'incrustent partiellement dans les surfaces concaves. Le liquide de refroidissement, malgré sa haute pression ne parvient pas à les arracher complètement. Pour parachever ce nettoyage, il suffit de disposer à proximité immédiate des surfaces à nettoyer un écran 13 fixe, épousant le contour de la surface concave du galet 1 et des surfaces avoisinantes (figure 5). Les fibres ou paillettes à moitié détachées s'accrochent alors au bord de l'écran 13 lors de la rotation du galet et agissent ensuite comme brosses 14 qui grossissent au cours du temps jusqu'à ce qu'ils tombent d'eux mêmes à la suite de leur propre poids qui augmente. Les endroits les plus critiques de la surface du galet 1, par exemple aux environs du bord 4 du galet 1 qui vient en contact avec un cordon de soudure incandescent, peuvent faire l'objet d'un nettoyage plus rigoureux à l'aide de frotteurs 15 fixés sur l'écran 13 et appliqués sur des parties de surface du galet 1 à l'aide de ressorts 16.

Lorsque le refroidissement peut se limiter aux bords 3 et 4 d'un galet 1, il est possible aussi de disposer un écran de guidage fixe 17 dans l'intérieur de la gorge du galet 1 qui tourne et de refroidir simultanément les deux bords 3 et 4 par des jets déviés par l'écran 17, provenant de deux jeux de tuyères 18 et 19 (figure 6).

Le dispositif de nettoyage et de refroidissement décrit ci-dessus présente l'énorme avantage par rapport à une douche que l'eau n'est pas dispersée partout, mais reste confinée dans une nappe cohérente, même lorsque le débit est fortement augmenté et surtout dans ce dernier cas. Grâce au fait que lors d'un grand débit la pression centrifuge de la nappe d'eau sur la surface concave augmente, le contact thermique est fortement amélioré. De plus, la surface du galet qui tourne sort de la nappe d'eau non pas pleine de gouttes mais seulement recouverte d'un film humide facilement séché et épongé par un tampon non représenté.

1

## REVENDICATIONS

1. Dispositif de nettoyage et/ou de refroidissement de galets (1;6) de soudage ou de forgeage concaves comprenant des moyens pour projeter de l'eau sur la surface concave dont au moins une partie vient en contact avec des zones incandescentes d'une matière entraînée par les dits galets,

caractérisé en ce qu'une tuyère (2) ou un ensemble de plusieurs tuyères(2,12,18,19) est disposé à proximité d'un bord d'une surface concave (3;7;17) disposée dans le prolongement d'une partie de la surface concave du galet (1;6) à refroidir, en ce que l'extrémité de cette tuyère (2,12) ou de cet ensemble de tuyères (2,12) est orientée en direction du bord de cette surface concave dans un secteur angulaire déterminé (10,11) par rapport à l'axe du galet (1,6) et en ce que cette tuyère (2,12) ou ensemble de tuyères (2,12) est relié à une source de liquide de refroidissement sous pression.

2. Dispositif suivant la revendication 1, caractérisé en ce que la surface concave disposée dans le prolongement de la partie de la surface concave à refroidir (4,8) est la surface concave du galet (1,6).

3. Dispositif suivant la revendication 1 caractérisé en ce que la surface concave disposée dans le prolongement de la partie de la surface concave du galet à refroidir fait partie d'un écran directeur (17) fixe s'étendant à l'intérieur de la concavité du galet (1).

4. Dispositif suivant une des revendications précédentes, caractérisé en ce que dans deux secteurs angulaires déterminés (10,11) différents l'un (4) et l'autre (3) bord de la surface concave du galet (1) est refroidi.

5. Dispositif suivant une des revendications précédentes, caractérisé en ce qu'un écran fixe (13)épousant le contour de la surface concave du galet (1) et des surfaces avoisinantes est disposé à proximité immédiate de ces surfaces qui défilent devant lui.

6. Dispositif suivant la revendication 5, caractérisé en ce que cet écran sert de support à des frotteurs (15) appliqués contre des parties de surface du galet (1) par des moyens élastiques (16).

58.28/1787.

Fig.1

Fig.2

9

8

6

2

7

Fig.3

12

11

3

10

Fig.4

4

1

16 13 15 14 1

1

17

18

19

Fig.5

Fig.6

**Office européen des brevets**

**RAPPORT DE RECHERCHE EUROPEENNE**

Numéro de la demande

EP 80 20 1104

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | DE - C - 756 807 (STARRBAU)<br>* Complètement * | 1,3 | B 23 K 11/30 |
| A | FR - A - 716 098 (LANGUEPIN)<br>* Page 2, résumé * | 1 | |

**DOMAINES TECHNIQUES RECHERCHES (Int. Cl. 3)**

B 23 K 11/06
11/08
11/30
11/36

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-03-1981 | HOORNAERT |

OEB Form 1503.1 06.78